# EUROPÄISCHE PATENTANMELDUNG

(11) **EP 4 480 904 A1**
(43) Veröffentlichungstag der Anmeldung: **25.12.2024**
(21) Anmeldenummer: 23020307.7
(22) Anmeldetag: 22.06.2023
(51) Int. Cl.: C01B 3/02, B01D 53/047, B01D 53/14, C01B 3/38, C01B 3/48, C01B 3/50, C01B 3/52, C01B 3/58, C01B 32/50

(54) **VERFAHREN UND VORRICHTUNG ZUR KOHLENDIOXIDARMEN WASSERSTOFFERZEUGUNG**

(71) Anmelder: Linde GmbH, 82049 Pullach (DE)
(72) Erfinder: Schwarzhuber, Josef, 82049 Pullach (DE); Seliger, Andreas, 82049 Pullach (DE); Müller-Thorwart, Ole, 82049 Pullach (DE); Haselsteiner, Thomas, 82049 Pullach (DE)
(74) Vertreter: Fischer, Werner

(57) **Zusammenfassung**

Die Erfindung betrifft ein Verfahren sowie eine Vorrichtung zur Erzeugung eines Wasserstoffprodukts (14), bei dem ein kohlenstoffhaltiger Einsatz (1) durch Reformierung (R) und Wassergas-Konvertierung (S) umgesetzt wird, um ein Wasserstoff und Kohlendioxid enthaltendes, als Synthesegas bezeichnetes Gasgemisch (5) zu erhalten, aus dem in einer Gaswäsche (G) Kohlendioxid (18) durch ein Sauergaswaschmittel (6) abgetrennt wird, um Rohwasserstoff (10) zu erhalten, der durch wenigstens einen weiteren Verfahrensschritt (B) zum Wasserstoffprodukt (14) aufbereitet wird, wobei ein Brennstoff (16) zur Gewinnung von Prozesswärme verbrannt und aus dem Synthesegas (5) abgetrenntes Kohlendioxid (18) durch Sequestrierung entsorgt oder einer stofflichen Nutzung zugeführt wird. Kennzeichnend hierbei ist, dass bei der Gaswäsche (G) aus dem Synthesegas (5) ein weitgehend aus Wasserstoff bestehendes Gasgemisch (12) gewonnen wird, das einen Kohlendioxidgehalt aufweist, der kleiner ist als derjenige des Synthesegases (5) und größer als derjenige des Rohwasserstoffs (10), und das zur Bildung des Brennstoffs (16) bereitgestellt wird.

## Beschreibung

Die Erfindung betrifft ein Verfahren zur Erzeugung eines Wasserstoffprodukts, bei dem ein kohlenstoffhaltiger Einsatz durch Reformierung und Wassergas-Konvertierung umgesetzt wird, um ein Wasserstoff und Kohlendioxid enthaltendes, als Synthesegas bezeichnetes Gasgemisch zu erhalten, aus dem in einer Gaswäsche Kohlendioxid durch ein Sauergaswaschmittel abgetrennt wird, um Rohwasserstoff zu erhalten, der durch wenigstens einen weiteren Verfahrensschritt zum Wasserstoffprodukt aufbereitet wird, wobei ein Brennstoff zur Gewinnung von Prozesswärme verbrannt und aus dem Synthesegas abgetrenntes Kohlendioxid durch Sequestrierung entsorgt oder einer stofflichen Nutzung zugeführt wird.

Außerdem betrifft die Erfindung eine Vorrichtung zur Durchführung des erfindungsgemäßen Verfahrens.

Wasserstoffprodukte wie Reinwasserstoff, der wenigstens zu 99,5mol-% aus Wasserstoff besteht, oder Ammoniaksynthesegas, in dem Wasserstoff und Stickstoff im Verhältnis 3:1 vorliegen, werden heute noch überwiegend aus kohlenstoffhaltigen Einsätzen unter Bildung und Freisetzung großer Mengen klimaschädlichen Kohlendioxids erzeugt. Doch gibt es verstärkt Anstrengungen, das anfallende Kohlendioxid nicht in die Atmosphäre zu entlassen, sondern durch Sequestrierung oder stoffliche Nutzung zu entsorgen.

Nach dem Stand der Technik wird zur Erzeugung eines Wasserstoffprodukts ein kohlenstoffhaltiger Einsatz, bei dem es sich etwa um Erdgas handelt, ggf. entschwefelt und anschließend beispielsweise durch Partielle Oxidation, Autothermalreformierung, Dampfreformierung oder eine Kombination von zwei oder mehr dieser Verfahren zu einem als Syntheserohgas bezeichneten Gasgemisch reformiert, das zu einem großen Teil aus Wasserstoff, Kohlenmonoxid sowie Kohlendioxid besteht und das daneben noch weitere Stoffe wie z.B. Methan oder Argon enthalten kann. Anschließend wird das Syntheserohgas einer Wassergas-Konvertierung unterzogen, um das enthaltene Kohlenmonoxid mit Wasser zu Wasserstoff und Kohlendioxid umzusetzen und ein weitgehend aus Wasserstoff und Kohlendioxid bestehendes Synthesegas zu gewinnen. In einer Sauergaswäsche wird Kohlendioxid mit Hilfe eines Sauergaswaschmittels aus dem Synthesegas abgetrennt, wobei eine Kohlendioxidfraktion mit einer für ihre Sequestrierung oder stofflichen Nutzung ausreichenden Reinheit sowie eine als Rohwasserstoff bezeichnete Wasserstofffraktion, die Reste von Kohlenmonoxid, Kohlendioxid und Methan enthält, und deren Wasserstoffgehalt gewöhnlich bei ca. 98mol-% liegt, erhalten werden.

Zur Bildung des Wasserstoffprodukts wird der Rohwasserstoff beispielsweise durch Methanisierung, Partielle Kondensation, Stickstoffwäsche oder Druckwechseladsorption behandelt, wobei Kohlenmonoxid und Kohlendioxid nach Umwandlung zu Methan oder direkt abgetrennt werden und eine weitgehend kohlen-und sauerstofffreie Wasserstofffraktion entsteht, die das Wasserstoffprodukt bildet oder aus der beispielsweise durch Zugabe von Stickstoff ein Ammoniaksynthesegas als Wasserstoffprodukt erhalten wird.

Sauergaswäschen nutzen die Eigenschaft von als Sauergaswaschmitteln bezeichneten Flüssigkeiten aus, Kohlendioxid und andere Sauergase aus einem Gasgemisch selektiv zu absorbieren und in Lösung zu halten. Beispiele für Sauergaswaschmittel sind Methanol und leicht alkalische wässrige Aminlösungen. Da das Syntheserohgas auf einem Druckniveau anfällt, das typischerweise zwischen 25 und 45 bar liegt, sind die zu behandelnden Volumenströme klein, so dass das Synthesegas mit vergleichsweise geringen Investitions- und Betriebskosten durch eine Sauergaswäsche behandelt werden kann.

Kohlendioxid ist auch in Rauchgasen enthalten, die bei der Erzeugung von Wasserstoffprodukten in Reformern und/oder Öfen entstehen, zu deren Beheizung gewöhnlich Brennstoffe wie Erdgas oder kohlenstoffhaltige Restgase eingesetzt werden. Anders als das Synthesegas, sind die Rauchgase normalerweise drucklos, enthalten Sauerstoff und sind durch Stickstoff aus der Verbrennungsluft verdünnt. Da sie deshalb im Vergleich zu Synthesegasen nur sehr kostenintensiv und aufwendig durch eine Sauergaswäsche behandelt werden können, werden sie üblicherweise zusammen mit dem bei der Verbrennung gebildeten Kohlendioxid in die Atmosphäre entlassen.

Mit den beschriebenen Methoden lassen sich nicht mehr als ca. 90% des zur Erzeugung des Wasserstoffprodukts eingesetzten Kohlenstoffs wirtschaftlich in Form von Kohlendioxid abtrennen und durch Sequestrierung entsorgen oder stofflich nutzen. Je nach den gesetzlichen Vorgaben und Pönalen auf die Kohlendioxidemissionen, kann es jedoch erforderlich sein, höhere Kohlenstoff-Abtrennquoten zu realisieren.

Aufgabe der vorliegenden Erfindung ist es daher, ein Verfahren der gattungsgemäßen Art sowie eine Vorrichtung zu dessen Durchführung anzugeben, die es erlauben, Kohlenstoff-Abtrennquoten von mehr als 90% mit geringeren Kosten als im Stand der Technik zu erreichen.

Diese Aufgabe wird verfahrensseitig erfindungsgemäß dadurch gelöst, dass bei der Gaswäsche aus dem Synthesegas ein weitgehend aus Wasserstoff bestehendes Gasgemisch gewonnen wird, das einen Kohlendioxidgehalt aufweist, der kleiner ist als derjenige des Synthesegases und größer als derjenige des Rohwasserstoffs, und das zur Bildung des Brennstoffs bereitgestellt wird.

Der aus dem weitgehend aus Wasserstoff bestehenden Gasgemisch erhältliche Brennstoff enthält Kohlenstoffverbindungen wie Kohlendioxid, Kohlenmonoxid oder Methan nur in geringen Mengen, so dass bei seiner Verbrennung ein weitgehend kohlendioxidfreies Rauchgas entsteht. Da der Brennstoff zumindest einen Teil der kohlenstoffhaltigen, nach dem Stand der Technik im Prozess eingesetzten Brennstoffe ersetzt, ist die bei der Erzeugung des Wasserstoffprodukts in die Atmosphäre freigesetzte Kohlendioxidmenge im Vergleich zum Stand der Technik reduziert.

Vorzugsweise wird so viel weitgehend aus Wasserstoff bestehendes Gasgemisch aus dem Synthesegas gewonnen, dass der Brennstoff in einer Menge erhalten wird, die ausreichend groß ist, um den Brennstoffbedarf der Wasserstofferzeugung vollständig zu decken. Besonders bevorzugt wird nicht mehr Brennstoff gewonnen, als zur vollständigen Deckung des Brennstoffbedarfs bei der Erzeugung des Wasserstoffprodukts benötigt wird. Möglich ist es aber auch, eine größere Brennstoffmenge zu erzeugen und nicht im Prozess einsetzbaren Brennstoff gegen Gutschrift zu exportieren.

Eine Gaswäsche ist gewöhnlich als Absorberkolonne ausgeführt, der in ihrem unteren Bereich das Sauergase - insbesondere Kohlendioxid - enthaltende Synthesegas zugeführt werden kann, um über Stoffaustauschelemente wie Siebböden oder Packungen nach oben geleitet zu werden. Zur Abtrennung der Sauergase wird im Gegenstrom ein der Absorberkolonne unbeladen aufgegebenes Sauergaswaschmittel geführt und mit Unterstützung der Stoffaustauschelemente intensiv mit dem Synthesegas in Kontakt gebracht. Auf seinem Weg nach unten reichert sich das Sauergaswaschmittel mit Kohlendioxid an, während der Kohlendioxidgehalt des Synthesegases auf seinem Weg nach oben kontinuierlich abnimmt. Die Mengenströme von Synthesegas und Sauergaswaschmittel sind so aufeinander abgestimmt, dass am Kopf der Absorberkolonne eine weitgehend kohlendioxidfreie Wasserstofffraktion als Rohwasserstoff erhalten wird, während aus den Kolonnensumpf das mit Kohlendioxid beladene Waschmittel abgezogen werden kann. Stromaufwärts des ersten und stromabwärts des in Strömungsrichtung des Synthesegases letzten Stoffaustauschelements der Sauergaswäsche weist das durch die Absorberkolonne geführte Gasgemisch einen Kohlendioxidgehalt auf, der kleiner als der des Synthesegases und größer als der des Rohwasserstoffs ist. Um Waschmittelverluste zu reduzieren und um zu verhindern, das mit dem Rohwasserstoff Waschmittelreste in stromabwärts der Sauergaswäsche angeordnete Einrichtungen gelangen, wo sie zu Störungen führen können, wird häufig die weitgehend kohlendioxidfrei aus der Sauergaswäsche abgezogene Wasserstofffraktion zum Erhalt des Rohwasserstoffs einer Wasserwäsche unterzogen und dabei ebenfalls über Stoffaustauschelemente geführt. Die Wasserwäsche kann - durch einen Kaminboden von der Sauergaswäsche abgetrennt - innerhalb der Absorberkolonne oder in einer eigenen Wasserwaschkolonne angeordnet sein.

Vorzugsweise wird das erfindungsgemäße Verfahren unter Einsatz einer derartigen Gaswäsche durchgeführt, wobei das weitgehend aus Wasserstoff bestehende Gasgemisch aus der Absorberkolonne über einen Seitenabzug abgezogen wird, der unterhalb des obersten Stoffaustauschelements der Sauergaswäsche und oberhalb der Synthesegaszuführung angeordnet ist. Da auch in der Wasserwäsche eine Kohlendioxidabtrennung stattfindet, kann es auch sinnvoll sein, den Seitenabzug zwischen der Sauergaswäsche und dem obersten Stoffaustauschelement der Wasserwäsche vorzusehen. Bevorzugt wird eine leicht alkalische wässrige Aminlösung als Sauergaswaschmittel eingesetzt.

Durch die Wahl der Position des Seitenabzugs ist es somit möglich, die Kohlendioxidkonzentration des weitgehend aus Wasserstoff bestehenden Gasgemisches so einzustellen, das eine vorgegebene Kohlenstoff-Abtrennquote bei geringsten Investitions- und Betriebskosten erreicht werden kann. Anders als im Stand der Technik, wird nur ein Teil des Synthesegases durch eine vollständige Wäsche zu Rohwasserstoff aufbereitet, während das für die Bildung des Brennstoffs bereitgestellte Gasgemisch aus dem übrigen Synthesegas durch eine lediglich unvollständige durchgeführte Wäsche erhalten wird. Die Sauergaswäsche kann daher im Vergleich zum Stand der Technik mit einer geringeren Waschmittelmenge durchgeführt werden. Insbesondere dann, wenn das weitgehend aus Wasserstoff bestehende Gasgemisch unterhalb des obersten Stoffaustauschelements der Sauergaswäsche abgezogen wird, führt das eingesparte Sauergaswaschmittel zu einer deutlichen Verbesserung der Wirtschaftlichkeit. Die Wahl der Position des Seitenabzugs ermöglicht es, die Kohlendioxidgehalte von Rohwasserstoff und dem weitgehend aus Wasserstoff bestehenden Gasgemisch unabhängig voneinander einzustellen.

Insbesondere dann, wenn durch die unmittelbare Verwendung des weitgehend aus Wasserstoff bestehenden Gasgemisches als Brennstoff eine geforderte Kohlenstoff-Abtrennquoten nicht erreicht werden kann, sieht eine Ausgestaltung des erfindungsgemäßen Verfahrens vor, Kohlenstoffverbindungen wie insbesondere Methan und Kohlenmonoxid aus dem weitgehend aus Wasserstoff bestehenden Gasgemisch bevorzugt durch Membrantrennung, Druckwechseladsorption, kryogene Gaszerlegung oder in einer Kombination von wenigstens zwei dieser Verfahren abzutrennen und über eine Rückführleitung dem kohlenstoffhaltigen Einsatz beizumischen.

Bevorzugt wird der unter Verwendung des weitgehend aus Wasserstoff bestehenden Gasgemisches gebildete Brennstoff verbrannt, um für den Prozess benötigten Dampf zu gewinnen oder um einen Einsatzstoff für die Reformierung vorzuwärmen. Möglich ist aber auch, einen zur Reformierung eingesetzten Dampfreformer oder einen Vorreformer mit dem Brennstoff zu beheizen.

Das erfindungsgemäße Verfahren eignet sich insbesondere zum Einsatz in einer Ammoniaksynthese, wobei der Rohwasserstoff durch Methanisierung oder Stickstoffwäsche oder Stickstoffzugabe zu einem Ammoniaksynthesegas aufbereitet wird.

Die Umsetzung des kohlenstoffhaltigen Einsatzes kann im Rahmen des erfindungsgemäßen Verfahrens durch Partielle Oxidation, Autothermalreformierung, Dampfreformierung oder eine Kombination von zwei oder mehr dieser Verfahren erfolgen, denen eine Vorreformierung vorangehen kann. Mit besonderem Vorzug kann das erfindungsgemäße Verfahren dann eingesetzt werden, wenn der kohlenstoffhaltige Einsatz durch Autothermalreformierung oder Partielle Oxidation umgesetzt wird. Anders als beim Einsatz eines Dampfreformers, werden in diesen Fällen nur kleine, beispielsweise zur Anwärmung von Einsatzstoffen oder zur Dampferzeugung eingesetzte Öfen, unter Freisetzung von vergleichsweise geringen Rauchgasmengen in die Atmosphäre, beheizt. Um den Brennstoffbedarf dieser Öfen durch ein weitgehend aus Wasserstoff bestehendes Brenngas decken zu können, braucht nur ein kleiner Anteil des Synthesegases aus der Sauergaswäsche als weitgehend aus Wasserstoff bestehendes Gasgemisch abgezogen zu werden.

Weiterhin betrifft die Erfindung eine Vorrichtung zur Erzeugung eines Wasserstoffprodukts, mit einer Reformiereinrichtung und einem mit der Reformiereinrichtung verbundenen Wassergas-Konverter, über die ein kohlenstoffhaltiger Einsatz durch Reformierung und Wassergas-Konvertierung zu einem Wasserstoff und Kohlendioxid enthaltenen Synthesegas umgesetzt werden kann, einer, eine Sauergaswäsche umfassenden Gaswäsche zur Abtrennung von Kohlendioxid aus dem Synthesegas und zum Erhalt von Rohwasserstoff, der das Wasserstoffprodukt bildet oder der in einer mit der Gaswäsche verbundenen Aufbereitungseinrichtung zum Wasserstoffprodukt aufbereitet werden kann, sowie einer Verbrennungseinrichtung, in der ein Brennstoff zur Gewinnung von Prozesswärme verbrennbar ist, wobei die Gaswäsche mit einer Einrichtung zur Sequestrierung oder stofflichen Nutzung des aus dem Synthesegas abgetrennten Kohlendioxids verbunden oder verbindbar ist.

Die gestellte Aufgabe wird vorrichtungsseitig erfindungsgemäß dadurch gelöst, dass die Gaswäsche dazu eingerichtet ist, aus dem Synthesegas ein weitgehend aus Wasserstoff bestehendes Gasgemisch, das einen Kohlendioxidgehalt aufweist, der kleiner als derjenige des Synthesegases und größer als derjenige des Rohwasserstoffs ist, zu gewinnen und zur Bildung des Brennstoffs bereitzustellen.

Eine Variante der erfindungsgemäßen Vorrichtung sieht eine Gaswäsche vor, die eine der Sauergaswäsche nachgeschaltete Wasserwäsche umfasst. Die Gaswäsche ist mit einer Abzugseinrichtung ausgeführt, über die die weitgehend aus Wasserstoff bestehende Gasfraktion aus der Sauergaswäsche oder der Wasserwäsche oder zwischen der Sauergas- und der Wasserwäsche abgezogen werden kann.

Vorzugsweise ist die Gaswäsche mit einer Absorberkolonne ausgeführt, in der zumindest die Sauergaswäsche angeordnet ist, wobei sich eine der Sauergaswäsche nachgeschaltete Wasserwäsche ebenfalls in dieser oder in einer separaten Waschkolonne befinden kann. Besonders bevorzugt weist die Gaswäsche zumindest zwei, von dem zu behandelnden Synthesegas von unten nach oben durchströmbare Stoffaustauschelemente auf, wobei sich eine Abzugseinrichtung für den Rohwasserstoff stromabwärts und eine Abzugsvorrichtung für das weitgehend aus Wasserstoff bestehende Gasgemisch stromaufwärts des letzten Stoffaustauschelements befindet.

Zum Erhalt des Brennstoffs kann die erfindungsgemäße Vorrichtung eine Trenneinrichtung aufweisen, mit der Kohlenstoffverbindungen wie insbesondere Kohlenmonoxid und Methan aus dem weitgehend aus Wasserstoff bestehenden Gasgemisch abtrennbar sind. Die als Membrantrennung, Druckwechseladsorber, kryogener Gaszerleger, Sauergaswäsche oder als Kombination von wenigstens zwei dieser Einrichtungen ausgeführte Trenneinrichtung ist sinnvollerweise so mit einer Rückführleitung verbunden, über die die abgetrennten Kohlenstoffverbindungen dem kohlenstoffhaltigen Einsatz stromaufwärts der Reformiereinrichtung zugemischt werden können.

Bei der Verbrennungseinrichtung handelt es sich beispielsweise um einen brennerbefeuerten Ofen, mit dem ein der Reformiereinrichtung zuzuführender Einsatz anwärmbar ist. Die Verbrennungseinrichtung kann aber auch ein brennerbefeuerter Dampferzeuger sein, der zur Erzeugung von Prozessdampf einsetzbar ist, oder ein Dampf- oder Vorreformer der Reformiereinrichtung, der über einen Brenner beheizt werden kann.

Eine Ausgestaltung der erfindungsgemäßen Vorrichtung sieht eine Aufbereitungseinrichtung vor, die einen Druckwechseladsorber umfasst, der es erlaubt, aus dem Rohwasserstoff Reinwasserstoff mit einem Wasserstoffgehalt von mehr als 99,5mol-% zu erhalten. Der Reinwasserstoff kann als Wasserstoffprodukt abgegeben oder zum Wasserstoffprodukt weiterbehandelt werden.

Vorzugsweise ist die Aufbereitungseinrichtung mit einer Ammoniaksynthese verbunden und dazu eingerichtet, den Rohwasserstoff zu einem Ammoniaksynthesegas aufzubereiten, das der Ammoniaksynthese als Einsatzgas zuführbar ist. Die Aufbereitungseinrichtung kann hierbei beispielsweise einen Druckwechseladsorber zur Erzeugung von Reinwasserstoff und eine Stickstoffzuführung umfassen, über die der Reinwasserstoff zum Ammoniaksynthesegas mischbar ist. Möglich ist es aber auch, dass die Aufbereitungseinrichtung einen Methanisierer oder eine partielle Kondensation oder eine Stickstoffwäsche umfasst.

Eine für die erfindungsgemäße Vorrichtung besonders geeignete Reformiereinrichtung ist mit einem Autothermalreformer oder einen Partialoxidationsreaktor ausgeführt, die lediglich für brennerbefeuerte Hilfsaggregate, wie etwa zur Anwärmung von Einsatzstoffen einsetzbare Öfen, einen Brennstoff benötigen, weshalb nur wenig Synthesegas zur Gewinnung des weitgehend aus Wasserstoff bestehenden Brenngases abgezweigt werden muss, um das Wasserstoffprodukt ohne bzw. mit nur sehr geringer Freisetzung von Kohlendioxid in die Atmosphäre erzeugen zu können. Es soll aber nicht ausgeschlossen sein, dass die Reformiereinrichtung mit einem brennerbefeuerten Dampf- oder Vorreformer ausgeführt ist.

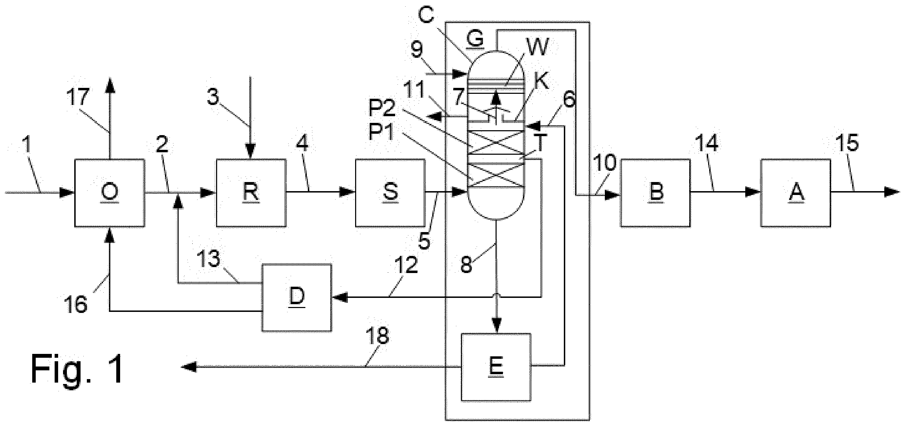

Im Folgenden wird die Erfindung anhand eines in der **Figur 1** schematisch dargestellten Ausführungsbeispiels näher erläutert.

Das Ausführungsbeispiel der Figur 1 zeigt eine bevorzugte Ausgestaltung des erfindungsgemäßen Verfahrens, bei der als Wasserstoffprodukt ein Ammoniaksynthesegas unter Verwendung eines Autothermalreformers erzeugt wird.

Dem brennerbefeuerten Ofen O wird ein kohlenstoffhaltiger Einsatz 1, bei dem es sich vorzugsweise um Erdgas handelt, zur Anwärmung und Entschwefelung zugeführt. Gemeinsam mit Sauerstoff 3 wird der angewärmte und entschwefelte Einsatz 2 im Autothermalreformer R zu einem Wasserstoff, Kohlenmonoxid und Wasser umfassenden Syntheserohgas 4 umgesetzt, aus dem im Wassergas-Konverter S ein weitgehend aus Wasserstoff und Kohlendioxid bestehendes Synthesegas 5 erhalten wird.

Zur Abtrennung von Kohlendioxid wird das Synthesegas 5 in die Absorberkolonne C der Gaswäsche G eingeleitet, wo es nach oben geführt und dabei in den Stoffaustauschelementen P1 und P2 der Sauergaswäsche T mit einem Sauergaswaschmittel 6, bei dem es sich vorzugsweise um eine leicht alkalische wässrige Aminlösung handelt, in intensiven Kontakt gebracht wird. Auf seinem Weg nach unten reichert sich das Sauergaswaschmittel 6 mit Kohlendioxid an, während der Kohlendioxidgehalt des Synthesegases 5 auf seinem Weg nach oben kontinuierlich abnimmt. Die Mengenströme von Synthesegas 5 und Sauergaswaschmittel 6 sind so aufeinander abgestimmt, dass über den Kaminboden K eine weitgehend kohlendioxidfreie Wasserstofffraktion 7 erhalten wird, während aus den Kolonnensumpf das mit Kohlendioxid beladene Waschmittel 8 zur Abtrennung von Kohlendioxid 18 in den Regenerierteil E der Gaswäschen G abgezogen werden kann.

In der Wasserwäsche W werden Reste des Sauergaswaschmittels mit Hilfe von Wasser 9 aus der weitgehend kohlendioxidfreien Wasserstofffraktion 7 ausgewaschen, um Rohwasserstoff 10 zu erhalten. Während das beladene Waschwasser 11 entsorgt oder für eine erneute Verwendung in der Wasserwäsche W regeneriert wird, wird der Rohwasserstoff 10 vom Kopf der Absorberkolonne C der Aufbereitungseinrichtung B zugeführt, wo er beispielsweise durch eine Kombination von Methanisierung, partieller Kondensation, Stickstoffwäsche und Stickstoffzumischung zu einem Ammoniaksynthesegas 14 aufbereitet wird, das insbesondere frei von Kohlenmonoxid ist, und in dem Wasserstoff und Stickstoff in dem für die nachfolgende Ammoniaksynthese A stöchiometrischen Verhältnis von 3:1 vorliegen. Das in der Ammoniaksynthese A erhaltene Ammoniak 15 wird z.B. in flüssiger Form gespeichert (nicht dargestellt).

Da der Kohlendioxidgehalt des durch die Sauergaswäsche geführten Synthesegases auf seinem Weg nach oben kontinuierlich abnimmt, kann stromabwärts des ersten P1 und stromaufwärts des zweiten Stoffaustauschelements P2 über einen Seitenabzug ein weitgehend aus Wasserstoff bestehendes Gasgemisch 12 mit einem Kohlendioxidgehalt aus der Absorberkolonne C abgezogen werden, der kleiner als der des Synthesegases 5 und größer als der des Rohwasserstoffs 10 ist. Obwohl das weitgehend aus Wasserstoff bestehende Gasgemisch 12 Kohlenstoff in Form von Kohlenmonoxid, Kohlendioxid und Methan nur in geringen Mengen enthält, wird es in die Trenneinrichtung D geführt, wo durch die Abtrennung von Kohlenmonoxid und Methan 13 ein Brenngas 16 erhalten wird, das im brennerbefeuerten Ofen O zur Erzeugung von Prozesswärme verbrannt wird. Die Menge des weitgehend aus Wasserstoff bestehenden Gasgemisches 12 wird so eingestellt, dass die Menge des Brenngases 16 ausreicht, um die für die Anwärmung des Einsatzes 1 benötigte Wärme vollständig bereitzustellen, so dass auf die Verfeuerung eines kohlenstoffhaltigen Brennstoffs verzichtet werden kann. Da das bei der Verbrennung anfallende Rauchgas 17 nur sehr wenig Kohlendioxid enthält, ist seine Freisetzung in die Atmosphäre ohne weitere Behandlung möglich. Die in der Trenneinrichtung D aus dem weitgehend aus Wasserstoff bestehenden Gasgemisch 12 abgetrennten Kohlenstoffverbindungen 13 werden dem angewärmten und entschwefelten Einsatz 2 zugemischt, während das im Regenerierteil E der Gaswäsche G erhaltenen Kohlendioxid 18 einer Entsorgung durch Sequestrierung oder stofflichen Nutzung (beides nicht dargestellt) zugeführt wird.

## Patentansprüche

1. Verfahren zur Erzeugung eines Wasserstoffprodukts (14), bei dem ein kohlenstoffhaltiger Einsatz (1) durch Reformierung (R) und Wassergas-Konvertierung (S) umgesetzt wird, um ein Wasserstoff und Kohlendioxid enthaltendes, als Synthesegas bezeichnetes Gasgemisch (5) zu erhalten, aus dem in einer Gaswäsche (G) Kohlendioxid (18) durch ein Sauergaswaschmittel (6) abgetrennt wird, um Rohwasserstoff (10) zu erhalten, der durch wenigstens einen weiteren Verfahrensschritt (B) zum Wasserstoffprodukt (14) aufbereitet wird, wobei ein Brennstoff (16) zur Gewinnung von Prozesswärme verbrannt und aus dem Synthesegas (5) abgetrenntes Kohlendioxid (18) durch Sequestrierung entsorgt oder einer stofflichen Nutzung zugeführt wird, **dadurch gekennzeichnet, dass** bei der Gaswäsche (G) aus dem Synthesegas (5) ein weitgehend aus Wasserstoff bestehendes Gasgemisch (12) gewonnen wird, das einen Kohlendioxidgehalt aufweist, der kleiner ist als derjenige des Synthesegases (5) und größer als derjenige des Rohwasserstoffs (10), und das zur Bildung des Brennstoffs (16) bereitgestellt wird.

2. Verfahren nach Anspruch 1, **dadurch gekennzeichnet, dass** die Gaswäsche (G) eine Sauergaswäsche (T) sowie eine der Sauergaswäsche (T) nachgeordnete Wasserwäsche (W) umfasst, wobei das weitgehend aus Wasserstoff bestehende Gasgemisch (12) aus der Sauergaswäsche (T) oder aus der Wasserwäsche (W) oder zwischen der Sauergaswäsche (T) und der Wasserwäsche (W) abgezogen wird.

3. Verfahren nach einem der Ansprüche 1 oder 2, **dadurch gekennzeichnet, dass** das Synthesegas (5) in der Gaswäsche (G) über wenigstens zwei seriell angeordnete Stoffaustauschelemente (P1, P2) geführt und dabei mit wenigstens einem Waschmittel (6) in Kontakt gebracht wird, wobei der Rohwasserstoff (10) stromabwärts und das weitgehend aus Wasserstoff bestehende Gasgemisch (12) stromaufwärts des in Strömungsrichtung des Synthesegases (5) letzten Stoffaustauschelements abgezogen wird.

4. Verfahren nach einem der Ansprüche 1 bis 3, **dadurch gekennzeichnet, dass** das weitgehend aus Wasserstoff bestehende Gasgemisch (12) unmittelbar oder nach Abtrennung von Kohlenstoffverbindungen (13) als Brennstoff (16) eingesetzt wird.

5. Verfahren nach einem der Ansprüche 1 bis 4, **dadurch gekennzeichnet, dass** eine leicht alkalische wässrige Aminlösung als Sauergaswachmittel (6) eingesetzt wird.

6. Verfahren nach einem der Ansprüche 1 bis 5, **dadurch gekennzeichnet, dass** die Reformierung (R) durch Autothermalreformierung oder Partielle Oxidation oder Dampfreformierung oder einer Kombination von zwei oder mehr dieser Methoden durchgeführt wird.

7. Verfahren nach einem der Ansprüche 1 bis 6, **dadurch gekennzeichnet, dass** der Rohwasserstoff (10) durch Methanisierung und/oder Druckwechseladsorption und/oder Stickstoffwäsche und/oder Partielle Kondensation zum Wasserstoffprodukt (14) aufbereitet wird.

8. Verfahren nach Anspruch 7, **dadurch gekennzeichnet, dass** als Wasserstoffprodukt (14) ein Ammoniaksynthesegas gewonnen wird.

9. Vorrichtung zur Erzeugung eines Wasserstoffprodukts (14), mit einer Reformiereinrichtung (R) und einem mit der Reformiereinrichtung (R) verbundenen Wassergas-Konverter (S), über die ein kohlenstoffhaltiger Einsatz (1) durch Reformierung und Wassergas-Konvertierung zu einem Wasserstoff und Kohlendioxid enthaltenen Synthesegas (5) umgesetzt werden kann, einer, eine Sauergaswäsche (T) umfassende Gaswäsche (G) zur Abtrennung von Kohlendioxid (18) aus dem Synthesegas (5) und zum Erhalt von Rohwasserstoff (10), der das Wasserstoffprodukt bildet oder der in einer mit der Gaswäsche verbundenen Aufbereitungseinrichtung (B) zum Wasserstoffprodukt (14) aufbereitet werden kann, sowie einer Verbrennungseinrichtung (O), in der ein Brennstoff (16) zur Gewinnung von Prozesswärme verbrennbar ist, wobei die Gaswäsche (G) mit einer Einrichtung zur Sequestrierung oder stofflichen Nutzung des aus dem Synthesegas (5) abgetrennten Kohlendioxids (18) verbunden oder verbindbar ist, **dadurch gekennzeichnet, dass** die Gaswäsche (G) dazu eingerichtet ist, aus dem Synthesegas (5) ein weitgehend aus Wasserstoff bestehendes Gasgemisch (12), das einen Kohlendioxidgehalt aufweist, der kleiner als derjenige des Synthesegases (5) und größer als derjenige des Rohwasserstoffs (10) ist, zu gewinnen und zur Bildung des Brennstoffs (16) bereitzustellen.

10. Vorrichtung nach Anspruch 9, **dadurch gekennzeichnet, dass** die Gaswäsche (G) eine der Sauergaswäsche (T) nachgeschaltete Wasserwäsche (W) umfasst und mit einer Abzugseinrichtung ausgeführt ist, über die das weitgehend aus Wasserstoff bestehende Gasgemisch (12) aus der Sauergaswäsche (T) oder der Wasserwäsche (W) oder zwischen der Sauergas- (T) und der Wasserwäsche (W) abgezogen werden kann.

11. Vorrichtung nach einem der Ansprüche 9 oder 10, **dadurch gekennzeichnet, dass** die Gaswäsche (G) mit wenigstens zwei im Strömungsweg des Synthesegases (5) seriell angeordneten Stoffaustauschelementen (P1, P2) ausgeführt ist, wobei der Rohwasserstoff (10) stromabwärts und das weitgehend aus Wasserstoff bestehende Gasgemisch (12) stromaufwärts des in Strömungsrichtung des Synthesegases (5) letzten Stoffaustauschelements abgezogen werden kann.

12. Vorrichtung nach einem der Ansprüche 9 bis 11, **dadurch gekennzeichnet, dass** sie eine Membrantrennung oder einen Druckwechseladsorber oder einen kryogenen Gaszerleger oder eine Sauergaswäsche zur Abtrennung von Kohlenstoffverbindungen (13) aus dem weitgehend aus Wasserstoff bestehenden Gasgemisch (12) aufweist.

13. Vorrichtung nach einem der Ansprüche 9 bis 12, **dadurch gekennzeichnet, dass** die Reformiereinrichtung (R) einen Autothermalreformer oder einen Partialoxidationsreaktor oder einen Dampfreformer oder einen Vorreformer oder eine Kombination von zwei oder mehr dieser Apparate umfasst.

14. Vorrichtung nach einem der Ansprüchen 9 bis 13, **dadurch gekennzeichnet, dass** die Verbrennungseinrichtung (O) ein brennerbefeuerter Ofen zur Anwärmung eines der Reformiereinrichtung (R) zuzuführenden Einsatzes (1) oder ein brennerbefeuerter Dampferzeuger oder ein über Brenner beheizbarer Dampf- oder Vorreformer der Reformiereinrichtung (R) ist.

15. Vorrichtung nach einem der Ansprüchen 9 bis 14, **dadurch gekennzeichnet, dass** sie einen Methanisierer und/oder Druckwechseladsorber und/oder eine Partielle Kondensation und/oder eine Stickstoffwäsche zur Aufbereitung des Rohwasserstoff (10) zum Wasserstoffproduckt (14) umfasst.
